# EUROPEAN PATENT SPECIFICATION

(11) **EP 0 449 517 B1**
(45) Date of publication and mention of the grant of the patent: **22.05.1996**
(21) Application number: 91302490.7
(22) Date of filing: 21.03.1991
(51) Int. Cl.: G11B 7/24, G11B 7/26, G11B 23/03, G11B 25/04

(54) **Optical disc**
Optische Platte
Disque optique

(30) Priority: 27.03.1990 JP 77972/90; 30.03.1990 JP 84308/90
(43) Date of publication of application: 02.10.1991
(73) Proprietor: SONY CORPORATION, Tokyo (JP)
(72) Inventor: Takahashi, Kenji, c/o Sony Magnetic Products Inc., Shinagawa-ku, Tokyo (JP)
(74) Representative: Ayers, Martyn Lewis Stanley

(56) References cited:
- EP-A- 0 195 330
- US-A- 4 743 994

## Description

The present invention generally relates to optical discs and, more particularly, is directed to an optical disc which can be used as a record medium and on which a variety of information signals can be recorded.

Optical discs such as magneto-optical discs and so on are known as recording media on which a variety of information signals can be recorded.

In one form of disc rotating drive unit for rotating such an optical disc, a magnet clamp system for reducing a thickness of an information record and read apparatus is proposed. This disc rotating drive unit is constructed such that a magnet is arranged on a disc table, and a magnetic metal plate, mounted on the optical disc, is magnetically attracted by this magnet to integrate the optical disc with the disc table for rotation.

The optical disc to be mounted on the disc rotating drive unit employing the magnet clamp system comprises a hub made of synthetic resin deposited at a central portion of the disc body for holding a magnetic metal plate.

An example of this kind of optical disc comprising a deposited hub is disclosed, for example, in Japanese Utility Model Application Number 62-199240 (Japanese Utility Model Laid-Open Gazette Number 1-107072).

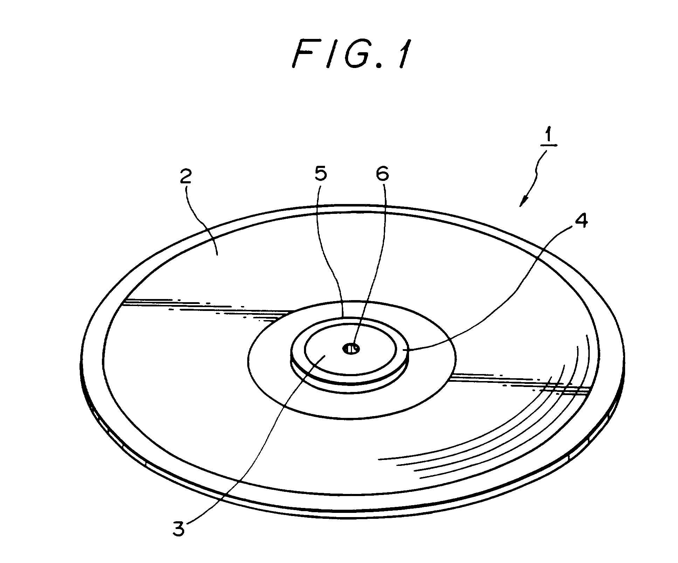

The general concept of such a conventional optical disc is shown in figures 1 to 3 of the accompanying drawings.

In the drawings, reference numeral 1 generally designates an optical disc, which is composed of a disc body 2 and a hub 5 having a metal plate 3 around the peripheral edge of which a resin ring 4 is integrally formed.

The disc body 2 is made by moulding a synthetic resin, for example, polycarbonate resin, in a disc shape, wherein a single surface or both surfaces are used as recording surface on which recording tracks are formed in the circumferential direction, and further a circular central aperture 2a is bored at a central portion thereof.

The metal plate 3 of the hub 5 is made of a magnetic material, for example, a steel plate or the like and is formed in a disc shape, wherein a centering aperture 6, smaller than the central aperture 2a of the disc body 2 is bored at a central portion thereof. The resin ring 4 is integrally moulded around the peripheral edge portion of this metal plate 3 by an outsert moulding method, by thereby complete the hub 5.

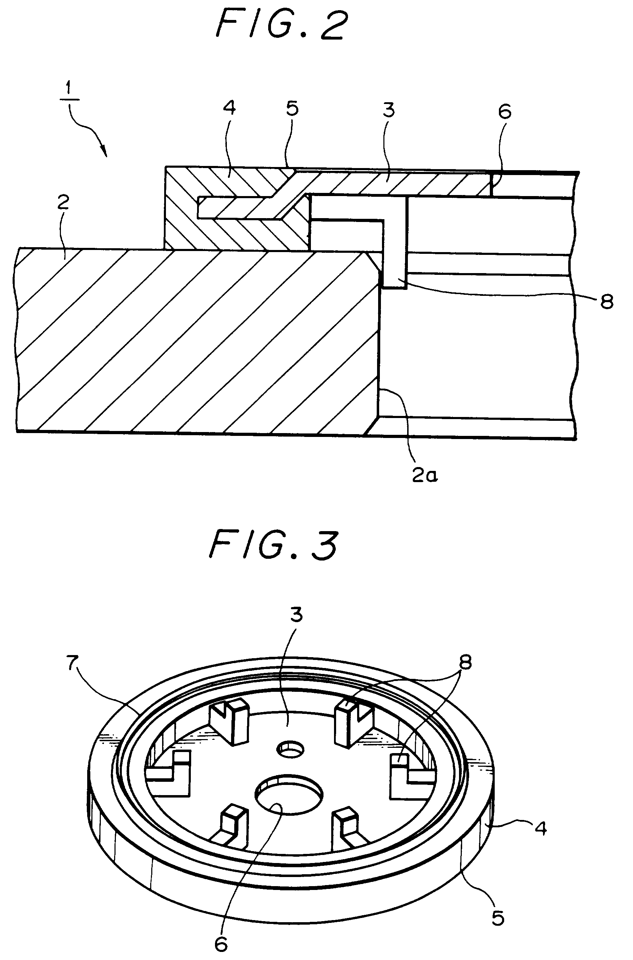

The surface of the resin ring 4 opposing the disc body 2 is provided with an annular rib 7 (see figure 3) for welding used when the hub 5 is mounted on the disc body 2. Also, from an inner peripheral portion of the resin ring 4, a plurality of protruding guiding ribs 8, which are slidably contacted with the inner peripheral surface of the central hole 2a of the disc body 2, are provided in a one-leg form.

When this hub 5 is to be mounted on the disc body 2, the surface of the resin ring 4 on which the rib 7 for welding is formed is opposed to the surface of the disc body 2, the guiding rib 8 is inserted into the central hole 2a, and the hub 5 is positioned in a condition that the guiding ribs 8 are contacted with the inner peripheral surface of the central hole 2a. Then, an ultrasonic horn is pressed against the resin ring 4, and application therefrom of ultrasonic energy for a predetermined period of time causes melting the rib 7 to be melted, welding the hub 5 on the disc body 2.

Thus, the hub 5 is mounted on the disc body 2 in a condition where the centering hole 6 of the metal plate 3 is precisely coincident with the centre of the track of the disc body 2, that is, alignment is achieved.

The optical disc thus constructed is generally accommodated in a disc cartridge for preservation purposes. Upon loading, the metal plate 3 of the hub 5 is attracted by the magnet on the disc table disposed on the disc driving mechanism side, while the spindle shaft is inserted into the centring hole 6 for positioning the disc, and the disc is driven to rotate in this clamped state.

The optical disc as mentioned above is generally left in a free condition in the disc cartridge, which many times results in that the centring hole 6 of the hub 5 and the spindle shaft of the disc driving mechanism side are not always aligned on the same axial line upon loading. For this reason, the hub 5 is clamped by the magnet on the disc table in a manner that the centring hole 6 of the hub 5 is forced against the spindle shaft, which gives rise to a defect that the centring hole 6 and the spindle shaft are prone to suffer from abrasion.

One way in which this problem is avoided is found in patent document EP-A-0,195,330, which teaches the use of a metal disc having a high abrasive resistance. This, however, can lead to extra costs.

Alternatively, as shown in what is described as prior art in patent document US-A-4,743,994 it is known not to centre the disc using the central hole in the metal plate, so much as to use an annular rib depending from the metal plate. The preamble of claim 1 is based on this description of prior art.

Accordingly, it is an object of the present invention to provide an improved optical disc which can substantially reduce or eliminate the aforenoted shortcomings and disadvantages encountered with the prior art.

According to a first aspect of the present invention there is provided an information recording disc comprising, at a central portion of a disc substrate, a hub including a magnetic metal plate, a ring-shaped member and a resin centring member with a centring hole in it, said resin centring member being arranged around the periphery of a centre hole in said metal plate, said hub being secured such that the centre of said centring hole coincides with the centre of recording tracks formed on the disc; characterised in that
said resin centring member is a reinforcing member, the resin of which has a high abrasion resistance and a high smoothness for preventing the centring hole from being abraded; and in that
said ring-shaped member is provided for securing the metal plate to the central portion of said disc substrate.

Other, optional, features of the invention are defined in the sub-claims.

In a clamping operation of a disc constructed according to the present invention, the centring hole of the hub is smoothly guided by the spindle shaft with a reduced friction force in a sliding manner, whereby neither the centring hole nor the spindle shaft suffer from abrasion.

The invention will be further described by way of non-limitative example with reference to the accompanying drawings, in which:-
Figure 1 is a perspective view of a disc according to the prior art;
Figure 2 is a vertical cross-sectional view of a main portion of the disc of Figure 1;
Figure 3 is a perspective view of the rear side of the hub of the disc of Figure 1;
Figure 4 is a vertical cross-sectional view (exploded view) of a main portion of an embodiment according to the present invention;
Figure 5 is a plan view showing the hub of the disc of Figure 4;
Figure 6 is a plan view of the hub of Figure 5 taken from the rear side; and
Figure 7 is a perspective view of the hub of Figure 5 taken from the rear side.

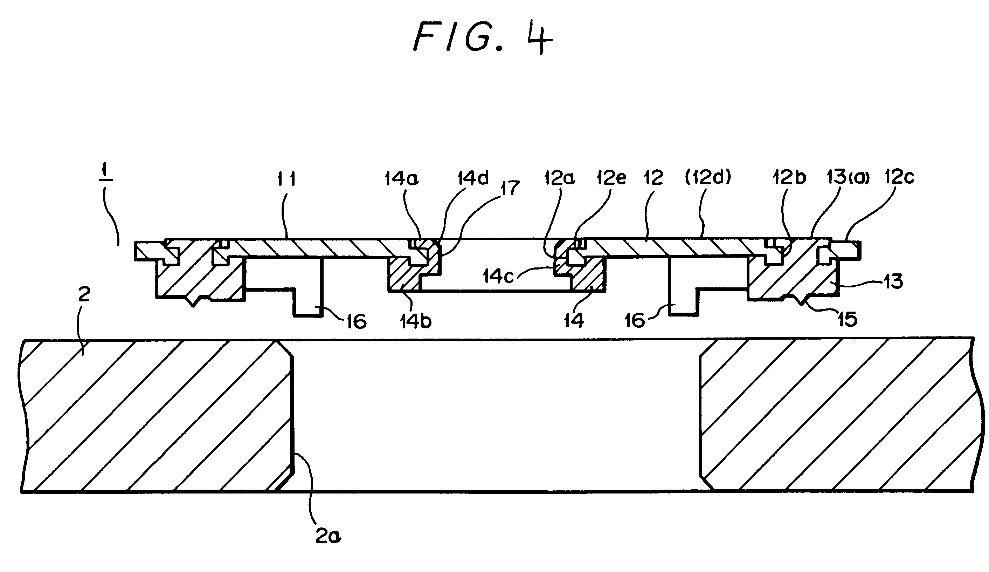

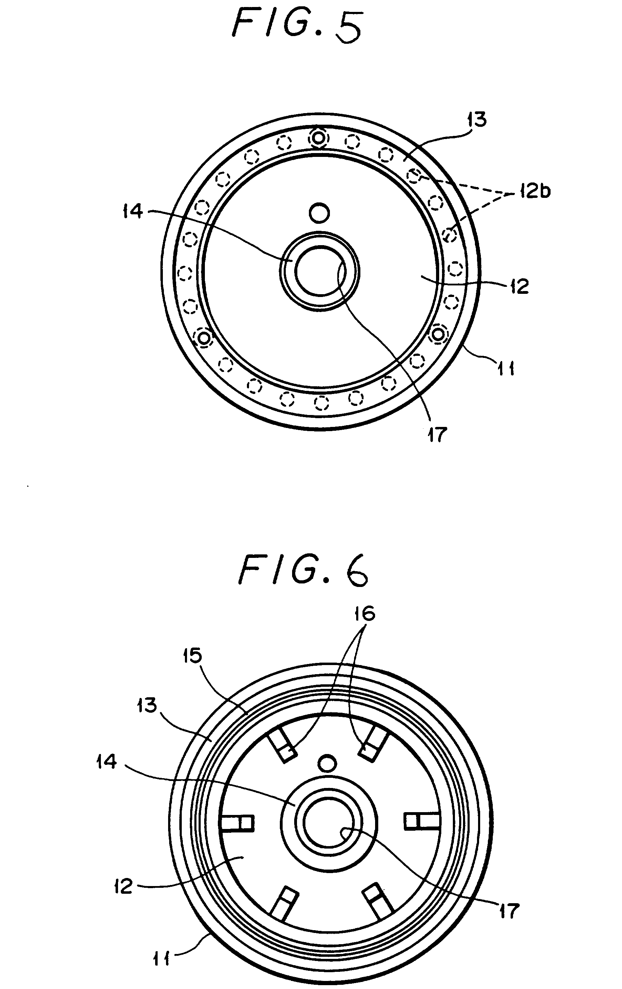

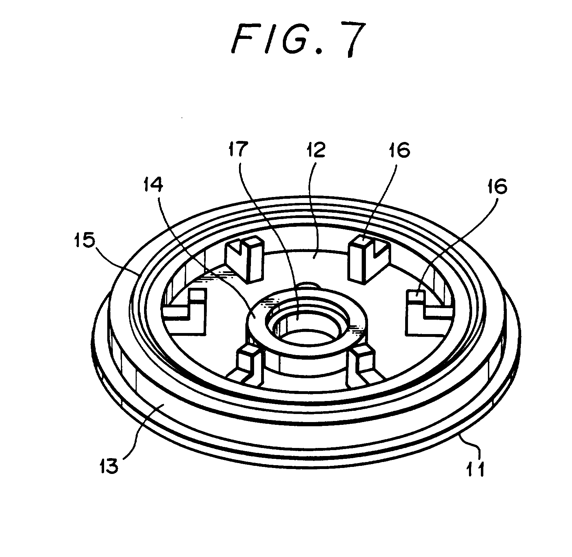

Hereinafter, an embodiment of the present invention will be explained with reference to Figures 4 to 7, where like parts corresponding to those in the prior art example shown in Figures 1 to 3 are designated by the same reference numerals and explanation thereof will be omitted.

The embodiment provides a novel structure of the hub mounted on the disc body 2 which differs significantly from the prior art.

More specifically, a hub 11 in an optical disc 1 of the present embodiment is composed of a metal plate 12, an outer peripheral resin ring (hereinafter simply called the outer peripheral ring) 13 integral with the outer peripheral side of this metal place 12, and an inner peripheral resin ring (hereinafter simply called the inner peripheral ring) 14 integral with the inner peripheral side of the metal plate 12.

The metal plate 12 is formed in a disc shape, for example, of a steel plate, and a central portion thereof is formed with a central hole 12a. On the outer peripheral side of this metal plate 12, the outer peripheral ring 13 is integrally formed by an outsert moulding method (this outer peripheral ring 13 is formed over both surfaces of the metal plate 12 through a plurality of through-holes 12b bored through a staged portion 12c on the outer peripheral side of the metal plate 12). On the surface of the outer peripheral ring 13 opposing the disc body 2, a rib 15 is formed for welding to the disc body 2 in an annular shape. Also, a plurality of guiding ribs 16, to be brought into contact with the central hole 2a of the disc body 2, protrude from the inner peripheral surface of the outer peripheral ring 13.

The surface of the outer peripheral ring 13 opposing a disc driving mechanism, that is, a surface 13a reverse to the surface on which the rib 15 for welding is provided, is formed so as to have a height substantially identical to a surface 12d of the metal plate 12. However, it is preferable that the surface 13a of the outer peripheral ring 13 protrudes a small amount from the surface 12d of the metal plate 12 to prevent the ultrasonic welding horn from coming into contact with the surface 12d of the metal plate 12 during ultrasonic welding.

As a material for this outer peripheral ring 13, a resin of excellent adhesivity (weldability) with the disc body 2 is employed. More specifically, since the disc body 2 is made of polycarbonate in this embodiment, the outer peripheral ring 13 is conveniently also moulded out of the same polycarbonate resin.

The inner peripheral ring 14 is moulded integrally with the central hole 12a of the metal plate 12 by an outsert moulding method, wherein the inner peripheral surface thereof is formed as a centring hole 17 into which a spindle shaft of the disc driving mechanism is inserted. The hub 11 of this embodiment thus has the centring hole 17 for positioning the disc defined by the inner peripheral ring 14.

This inner peripheral ring 14 is composed of a portion 14a disposed on a staged portion 12e on the inner peripheral side of the metal plate 12, a portion 14b disposed on the disc opposing surface side of the metal plate 12, and a coupling portion 14c for coupling these portions 14a and 14b, with the centring hole 17 being bored through the coupling portion 14c. The surface of the portion 14a is formed to be substantially flush with the surface 12d of the metal plate 12. Also, on the coupling portion 14c side of the portion 14a, there is provided a tapered surface 14d for guiding the spindle shaft.

As a material for this inner peripheral ring 14, a resin having a high abrasion resistance and a high smoothness, for example, a polyacetal resin or a polycarbonate resin including flourine may be employed.

Incidentally, moulding of these outer peripheral ring 13 and inner peripheral ring 14 is performed by a double outsert moulding method which moulds the outer peripheral ring 13 and the inner peripheral ring 14 onto the metal plate 12 in a sequence of moulding processes by applying a dichromatic moulding (double mould) method generally employed these days.

When the thus constructed hub 11 is mounted on the disc body 2, the surface of the outer peripheral ring 13, on which the rib 15 for welding is formed, is opposed to the disc body 2, the guiding ribs 16 are inserted into the central hole 2a and contacted with the inner peripheral surface thereof, and the hub 11 is positioned in this condition. Then, an ultrasonic horn is pressed against the outer peripheral ring 13 to apply ultrasonic energy for a predetermined time period, whereby the welding rib 15 is melted, resulting in the hub 11 being welded on the disc body 2.

When the optical disc 1 with the hub 11 thus mounted thereon is loaded, the metal plate 12 of the hub 11 is attracted by a magnet on a disc table arranged in the disc driving mechanism, while the spindle shaft is inserted into the centring hole 17 to position the optical disc 1, wherein the disc 1 remains in a clamping state.

In this clamping operation, the highly smooth resin employed in the centring hole portion reduces friction between the central hole 17 and the spindle shaft, whereby the centring hole 17 is guided to the spindle shaft in a sliding manner, and accordingly neither the centring hole 17 nor the spindle shaft will be abraded. Also, since the inner peripheral ring 14 forming the central hole 17 has the required abrasion resistivity, it will not be abraded easily.

Thus, the optical disc 1 of the embodiment, since the abrasion on the centring hole 17 of the hub 11 and the spindle shaft of the disc driving mechanism can be effectively prevented, provides a secure clamping condition and stable rotation.

Further, in the embodiment, the outer peripheral ring 13 of the hub 11 is moulded by using polycarbonate of the same type as the disc body 2, so that the hub 11 and the disc body 2 exhibits a favourable weldability, which results in high durability of the disc.

Incidentally, the material for the inner peripheral ring 14 of the hub 11 is not limited to the above mentioned polyacetal, and any material may be employed as long as it is excellent in abrasion resistance and smoothness.

As is apparent from the above explanation, the disc of the present invention has a centring hole portion of a hub formed of a resin having a high smoothness and abrasion resistance, whereby neither the centring hole of the hub nor the spindle shaft will be abraded, therefore making it possible to make a significant contribution to the provision of a longer life of the disc and disc driving mechanism.

## Claims

1. An information recording disc (1) comprising, at a central portion of a disc substrate (2), a hub (11) including a magnetic metal plate (12), a ring-shaped member (13) and a resin centring member (14) with a centring hole (17) in it, said resin centring member (14) being arranged around the periphery of a centre hole (12a) in said metal plate (12), said hub (11) being secured such that the centre of said centring hole (17) coincides with the centre of recording tracks formed on the disc (1); characterised in that
said resin centring member is a reinforcing member (14), the resin of which has a high abrasion resistance and a high smoothness for preventing the centring hole (17) from being abraded; and in that
said ring-shaped member (13) is provided for securing the metal plate (12) to the central portion of said disc substrate (2).

2. A disc according to claim 1, wherein said ring-shaped member (13) is arranged on the outer peripheral side of said metal plate (12).

3. A disc according to claim 1 or 2, wherein said reinforcing member (14) comprises a first portion (14a) arranged on one surface (12d) of said metal plate (12), a second portion (14b) arranged on an opposing surface of said metal plate (12), and a coupling portion (14c) arranged along the inner wall surface of said centre hole (12a) for coupling said first and second portions (14a,14b).

4. A disc according to claim 3, wherein said first portion (14a) is provided on a staged portion (12e) formed along the circumference of said centre hole (12a), and has its surface substantially on the same level with the surface (12d) of said metal plate (12).

5. A disc according to any one of the preceding claims wherein said ring-shaped member (13) and said reinforcing member (14) are formed integrally with said metal plate (12) by a resin moulding.

6. A disc according to any one of the preceding claims, wherein the surface of the hub (11) opposed to the hub surface mounted on the disc substrate (2) is substantially even.

## Patentansprüche

1. Informationsaufzeichnunqsplatte (1), die in einem Zentralbereich eines Plattensubstrats (2) eine Nabe (11) aufweist, die eine magnetische Metallplatte (12), ein ringförmiges Teil (13) und ein Kunststoff-Zentralteil (14) mit einem Zentralloch (17) besitzt, wobei das Kunststoff-Zentralteil (14) um den Umfang eines Zentrallochs (12a) in der Metallplatte (12) herum angeordnet ist, wobei die Nabe (11) so gesichert ist, daß der Mittelpunkt des Zentrallochs (17) mit dem Mittelpunkt der Aufzeichnungsspuren, die auf der Platte (1) gebildet ist, zusammenfällt; gekennzeichnet dadurch, daß
das Kunststoff-Zentralteil ein Verstärkungsteil (14) ist, wobei der Kunststoff eine hohe Abriebsfestigkeit und eine hohe Gleitfähigkeit besitzt, um zu verhindern, daß das Zentralloch (17) einen Abrieb erfährt; und daß
das ringförmige Teil (13) dazu vorgesehen ist, um die Metallplatte (12) am Zentralbereich des Plattensubstrats (2) zu sichern.

2. Platte nach Anspruch 1, wobei das ringförmige Teil (13) auf der äußeren peripheren Seite der Metallplatte (12) angeordnet ist.

3. Platte nach Anspruch 1 oder 2, wobei das Verstärkungsteil (14) ein erstes Teil (14a) besitzt, das auf der einen Oberfläche (12d) der Metallplatte (12) angeordnet ist, ein zweites Teil (14b), das auf einer gegenüberliegenden Oberfläche der Metallplatte (12) angeordnet ist, und ein Verbindungsteil (14c), das längs der inneren Wandoberfläche des Zentrallochs (12a) angeordnet ist, um das erste Teil (14a) mit dem zweiten Teil (14d) zu verbinden.

4. Platte nach Anspruch 3, wobei das erste Teil (14a) auf einem abgestuften Teil (12e) vorgesehen ist, das längs des Umfangs des Zentrallochs (12a) gebildet ist, und eine Oberfläche besitzt, die im wesentlichen die gleiche Höhe wie die Oberfläche (12d) der Metallplatte (12) besitzt.

5. Platte nach einem der vorhergehenden Ansprüche, wobei das ringförmige Teil (13) und das Verstärkungsteil (14) einstückig mit der Metallplatte (12) durch ein Kunststoff-Spritzverfahren ausgebildet sind.

6. Platte einem der vorhergehenden Ansprüche, wobei die Oberfläche der Nabe (11), die der Nabenoberfläche gegenüberliegt, welche auf dem Plattensubstrat (2) befestigt ist, im wesentlichen eben ausgebildet ist.

## Revendications

1. Disque d'enregistrement d'informations (1) comprenant, dans une partie centrale d'un substrat (2) de disque, un moyeu (11) comprenant une plaque métallique magnétique (12), un élément (13) de forme annulaire et un élément de centrage en résine (14) présentant intérieurement un trou de centrage (17), ledit élément de centrage en résine (14) étant agencé autour de la périphérie d'un trou central (12a) pratiqué dans ladite plaque métallique (12), ledit moyeu (11) étant fixé de telle manière que le centre dudit trou de centrage (17) coïncide avec le centre des pistes d'enregistrement formées sur le disque (1) ;
caractérisé en ce que
ledit élément de centrage en résine est un élément de renforcement (14), dont la résine possède une haute résistance à l'abrasion et un haut degré d'état de surface afin d'éviter que le trou de centrage (17) ne subisse une abrasion ; et
ledit élément (13) de forme annulaire est prévu pour fixer la plaque métallique (12) dans la partie centrale dudit substrat (2) de disque.

2. Disque selon la revendication 1, dans lequel ledit élément annulaire (13) est agencé sur le bord périphérique extérieur de ladite plaque métallique (12).

3. Disque selon la revendication 1 ou 2, dans lequel ledit élément de renforcement (14) comprend une première partie (14a) disposée sur une surface (12d) de ladite plaque métallique (12), une deuxième partie (14b) agencée sur la face opposée de ladite plaque métallique (12), un partie d'accouplement (14c) disposée le long de la surface de paroi intérieure dudit trou central (12a) pour accoupler desdites première et deuxième parties (14a, 14b).

4. Disque selon la revendication 3, dans lequel ladite première partie (14a) est prévue sur une partie décalée (12e) formée le long de la circonférence dudit trou central (12a), et présente sa surface sensiblement au même niveau que la surface (12d) de ladite plaque métallique (12).

5. Disque selon une quelconque des revendications précédentes, dans lequel ledit élément (13) de forme annulaire et ledit élément de renforcement (14) sont intégrés à ladite plaque métallique (12) par moulage en résine.

6. Disque selon une quelconque des revendications précédentes, dans lequel la surface du moyeu (11) qui est à l'opposé de la surface du moyeu qui est montée sur le substrat (2) du disque est sensiblement plane.
